# EUROPEAN PATENT APPLICATION

(11) **EP 1 599 031 A2**
(43) Date of publication of application: **23.11.2005**
(21) Application number: 05010795.2
(22) Date of filing: 18.05.2005
(51) Int. Cl.: H04N 1/60, H04N 1/56

(54) **Image processing apparatus**

(30) Priority: 18.05.2004 JP 2004147805
(71) Applicant: NORITSU KOKI CO., LTD., Wakayama-shi, Wakayama (JP)
(72) Inventor: Yasukazu, Tanaka, Wakayama-shi Wakayama (JP)
(74) Representative: DTS Zürich

(57) **Abstract**

An image processing apparatus for reading out at least one image data stored in a storing means and displaying the same on a screen, and applying a given correction to image data of said at least one image data selected by a user via said screen is provided. The image processing apparatus includes a group correction table having plural group information sources, each containing a correction group of plural different correction items and identification information for allowing for unique identification of the correction group, in which the image processing apparatus is designed so that the content of correction relating to a desired one of the group information sources can be reflected in batch manner in image data selected by a user.

## Description

The present invention relates to an image processing apparatus for applying various corrections such color density correction to image data.

Recently, a new type of photo-processing apparatus (an image processing apparatus) is becoming widely used by photo studios and the like. The apparatus reads out image data from a photographic film or various media, digitally processes the image data such as by applying color density correction or contrast correction to the image data, prints the corrected image data on paper and/or stores the image data in various media.

The image data processing apparatus of the above type is usually equipped with a GUI (Graphical User Interface), thus providing a user with an environment allowing for ease of processing digital images, which processing usually tends to be complicated.

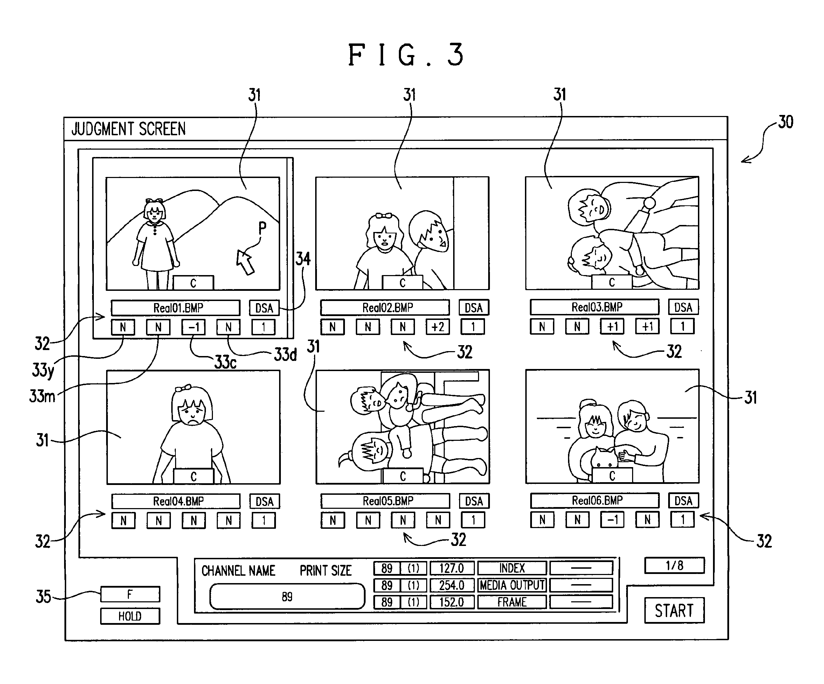

As a GUI for digital image processing, a so-called photo retouch application software is well known. FIG. 3 illustrates an example of an operation screen of a conventional photo retouch. The operation screen of FIG. 3 (a so-called judgment screen) displays 6 frames (frame images 31) (2 rows × 3 columns) of image data in index mode.

Correction-button areas 32 are arranged or displayed respectively below the frame images 31, each area having a color correction button and display portions (hereinafter simply referred to color correction buttons) 33y, 33m, 33c, a density correction button and display portion (hereinafter referred simply to a density correction button) 33d and a DSA button 34. The DSA is an abbreviation of Digital Scene Adjustment and a generic term relating to correction of contrast, chroma, sharpness and the like.

The color correction buttons 33y, 33m, 33c are respectively designed to correct yellow (Y) components, magenta (M) components and cyan (C) components (hereinafter respectively referred simply to "Y", "M" and "C") of each corresponding frame image 31. The density correction button 33d is designed to correct the density of an image (hereinafter referred simply to "D"). The DSA button 34 is designed to adjust contrast, chroma, sharpness and the like of each corresponding frame image 31.

Now, the description will be made for the operation manner of each button as mentioned above. For each of the color correction buttons 33y, 33m, 33c, and the density correction button 33d, a mouse cursor (a pointer P) is moved to a frame image 31 to be corrected (a subject frame image) and clicked so as to highlight a corresponding button for activation of its correction mode, enabling input of correction items. In this activation state, such as " ↑ " key on a keyboard is pressed so as to stepwisely increase a corresponding color correction value or density correction value every time the key is pressed, while such as " ↓ " key is pressed so as to stepwisely decrease a corresponding color correction value or density correction value every time the key is pressed. Once a correction value is changed, its changed content (an increase or decrease of a color component or density according to the correction value) is reflected in a screen. For the button, through which correction was made, the changed correction value is displayed on the button (e.g., "-1", "1" or the like). A sign "N" represents a default state (a pre-correction state).

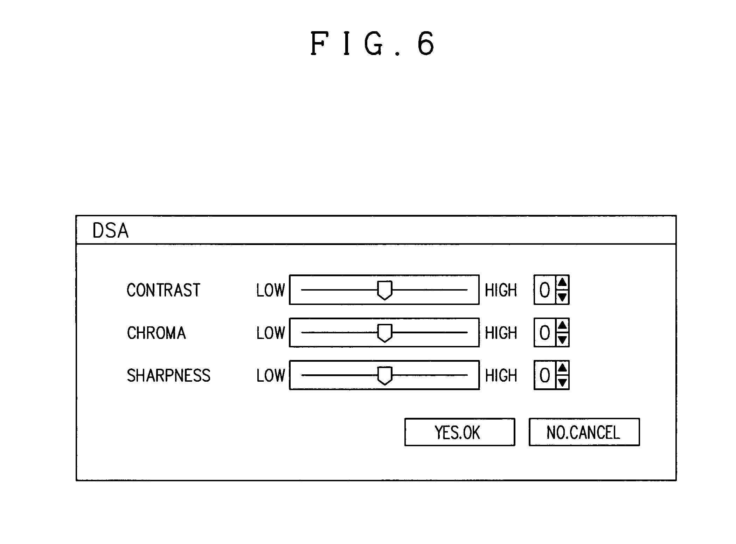

For adjustment of DSA, the pointer P is moved to the DSA button 34 corresponding to a subject frame image 31 and clicked so as to pop up a DSA setting screen as illustrated in FIG. 6. The DSA setting screen allows for inputting of a correction value of each item, "CONTRAST", "CHROMA" and "SHARPNESS", as illustrated in FIG. 6, so that a user can input a correction value of each item through the mouse or keyboard. Since the content of each correction value inputted is instantly reflected in the subject frame image 31, the user can set a correction value in each item by the observation of the screen reflecting the ongoing status of the correction. After the adjustment of the DSA, "YES. OK" button is pressed or clicked so as to close the DSA setting screen and store the correction values set in the screen as the DSA of the corresponding frame image 31.

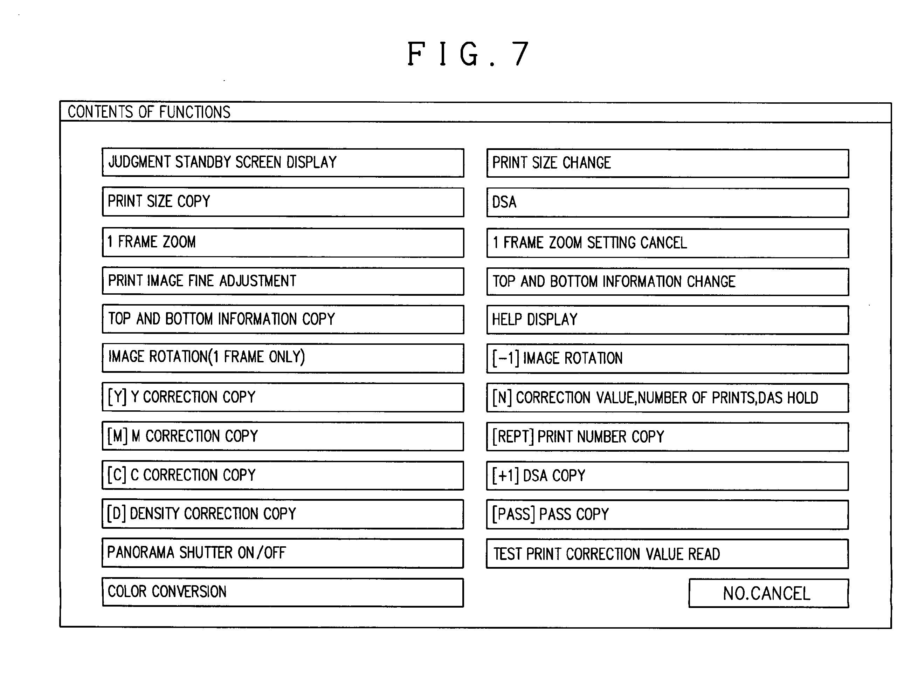

In the image processing as mentioned above, there are many cases in which the same correction is to be made to different frame images. In order to deal with such a case by a conventional apparatus, a "FUNCTION" screen as illustrated in FIG. 7 is once opened (this screen is displayed such as by pressing or clicking an "F" button 35 in the judgment screen), and then copying must be made for each correction item ("Y", "M", "C", "D" and "DSA") by using copying buttons ("Y-CORRECTION COPY" button, "M-CORRECTION COPY" button, "C-CORRECTION COPY" button, "DENSITY-CORRECTION COPY" button and "DSA COPY' button).

The above copying is possible only for one of successive frame images adjacent or subsequent to a copied frame image (e.g, when "Real01.BMP" is a source, a destination is "Real02.BMP", "Real02.BMP"+"Real03.BMP" or the like), and therefore not possible between frame images not adjacent each other (e.g., when "Real01.BMP" is a source, a destination is "Rea103.BMP", "Rea104.BMP" or the like), so that the same correction must be made independently for such a frame image item by item by using a color correction button, DSA button (DSA setting screen) or the like.

The present invention has been conceived to solve the above problem. It is an object of the present invention to provide an image processing apparatus that is capable of promptly applying various corrections to image data, thus offering high operational efficiency.

According to the present invention, there is provided an image processing apparatus for reading out at least one image data stored in a storing means and displaying the same on a screen, and applying a given correction to image data of the at least one image data selected by a user via the screen. The image processing apparatus includes a group correction table having plural group information sources, each containing a correction group of plural different correction items and identification information for allowing for unique identification of the correction group, in which the image processing apparatus is designed so that the content of correction relating to a desired one of the group information sources can be reflected in batch manner in image data selected by a user.

According to the above image processing apparatus, the content of correction relating to a desired one of the group information sources can be reflected in batch manner in a selected image data (a frame image) to be corrected. Therefore, by setting the content of correction (group information) that is expected to be frequently applied is previously set in the group correction table, correction for plural image data can promptly be performed. While it is not necessary to limit the kinds of correction items and the number of correction items to specific ones, each correction group is preferably made up of general correction items, namely color density correction (correction applied to "Y", "M", "C" and "D"), contrast, chroma and sharpness. Where the group information sources are set to be categorized into three general standard corrections respectively for "FLASH SCENE", "BACKLIGHT SCENE" and "COLOR FAILURE SCENE", correction can be made with improved efficiency.

The identification information for unique identification of the group information sources is preferably associated with an operation key (e.g., "S" and "W") of a keyboard that is usually provided in the image processing apparatus. In this case, the above correction reflection operation in batch manner may be achieved merely by pressing a corresponding operation key of the keyboard. This contributes to ease of use by the user and hence improved operation.

A group-correction setting screen is preferably displayed so as to allow the user to check the content of the group correction table. It is also preferable that the content of correction relating to each of the group information sources of the group correction table can be changed according to needs and circumstances.

The plural different correction items in the content of correction relating to each of the group information sources can be changed independently of each other via the group-correction setting screen. Alternatively or in combination therewith, the content of correction relating to a desired one of the group information sources of the group correction table can be changed in batch manner to the content of correction relating to image data selected by the user. In the latter case, the content of correction applied to a frame image can be set in batch manner in the group correction table. This provides convenience in initial setting (e.g., for starting a program for the image processing, or any other cases where the group correction table is in default setting). The former manner is effective in fine adjustment after the setting in batch manner, or the like.

Plural image data may be selected as subjects to which the content of correction relating to a desired one of the group information sources is reflected in batch manner. This further improves an efficiency in correction operation. This selection of plural image data (frame images) can be made irrespective of whether these data or frame images are successively arranged or adjacent to each other. Specifically, this can be achieved by a conventional manner which involves for example moving a mouse cursor to a subject frame image and clicked while pressing Ctrl key on the keyboard and then repeating the same until plural frame images are selected.

The group correction table is preferably arranged so as to allow the user to selectively make each of the plural different correction items valid or invalid, in consideration of the fact that there are cases where some of the correction items are not used depending on the kind of a group information source to be set in the group correction table.

According to an image processing apparatus having an arrangement mentioned above, there is provided a group correction table that is capable of setting and holding plural different group information sources, each containing a correction group of plural different correction items, and reflecting in batch manner the content of correction relating to a desired one of the group information sources in a selected image data. As a result, the correction operation applied to plural image data, to which the same content of correction is to be applied, can be more rapidly made and hence improved operation efficiency can be achieved.

FIG. 1 is an external view of a photo-processing system with an image processing apparatus according to one embodiment of the present invention.

FIG. 2 illustrates a schematic arrangement of the photo-processing system of the one embodiment.

FIG. 3 illustrates an example of a judgment screen displayed on a monitor of the photo-processing system.

FIG. 4 illustrates an example of a group-correction setting screen displayed on the monitor.

FIG. 5 illustrates an example of a FUNCTION screen displayed on the monitor.

FIG. 6 illustrates an example of a DSA setting screen displayed on a monitor.

FIG. 7 illustrates an example of a FUNCTION screen displayed on a monitor of a conventional image processing apparatus.

Now, the description will be made for a photo-processing system with an image processing apparatus according to one embodiment of the present invention with reference to the drawings attached hereto.

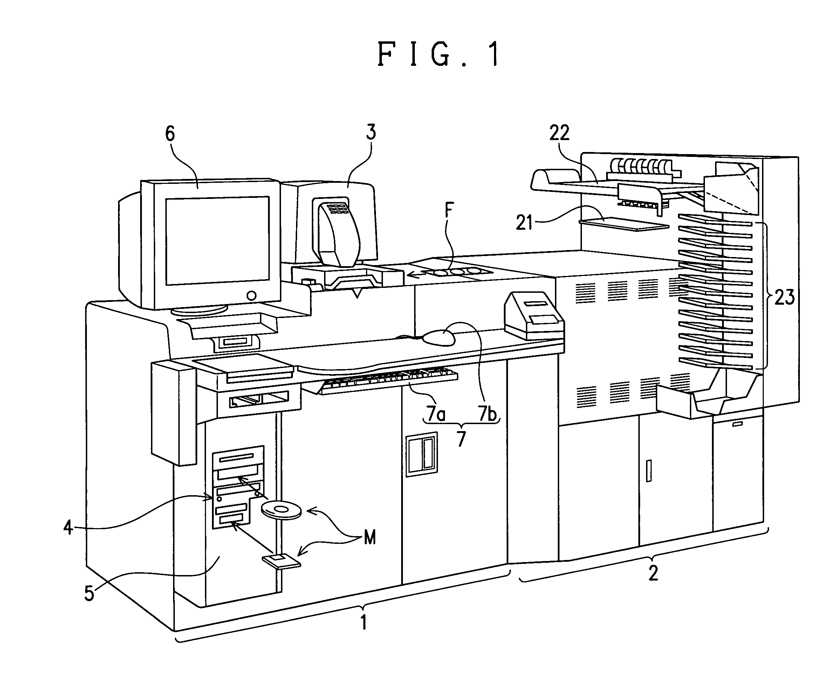

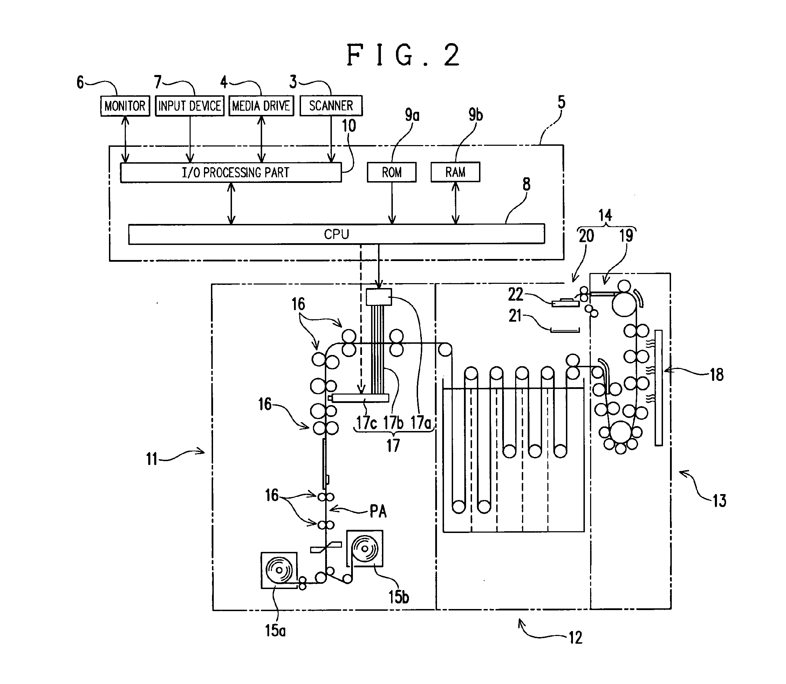

FIG. 1 is an external view of a photo-processing system with an image processing apparatus of this embodiment. FIG. 2 is a block diagram illustrating the inside structure of the photo-processing system. This photo-processing system includes an image processing apparatus 1 and a printing apparatus 2. The image processing apparatus 1 is designed to read out image data from a photographic film F or media M, digitally process the image data such as by applying color density correction or contrast correction thereto so as to generate image data for output. The printing apparatus 2 is designed to print an image on a photographic sensitive material PA based on the image data output from the image processing apparatus 1.

The image processing apparatus 1 includes a scanner 3 for reading an image on the photographic film F or the like, a media drive 4 that is capable of reading and writing the media M such as CD-ROM, a memory card or the like, a main control unit 5 for controlling the entire operation of the photo-processing system as well as the image processing apparatus 1, a monitor 6 for displaying an image read out from the photographic film F or media M, and an input device 7 for receiving an operational command from the user.

Internally located in the main control unit 5 are a CPU 8 for main control and calculation, a ROM 9a for storing an image processing program or the like, a RAM 9b for use as a work area or the like for processing, and an I/O processing part 10 for performing I/O processing with respect to various outside devices (the scanner 3, the media drive 4, the monitor 6 and the input device 7).

The printing apparatus 2 includes an exposing section 11 for exposing the photographic sensitive material PA based on image data whose image has been processed by the image processing apparatus 1, a development section 12 for developing the exposed photographic sensitive material PA, a drying section 13 for drying the developed photographic sensitive material PA, and a sorting section 14 for sorting photographs produced from the dried photographic sensitive material PA.

The exposing section 11 pulls the photographic sensitive material PA out of a pair of magazines 15a, 15b, and conveys the same to the downstream side by conveying rollers 16. The photographic sensitive material PA is exposed by an exposing device 17 made up of a light source 17a of a halogen lamp or the like and an optical shutter 17c connected to the light source 17a via an optical fiber bundle 17b.

The development section 12 applies treatments such as development, bleaching, fixing and stabilizing to the photographic sensitive material PA.

The drying section 13 blows hot air through a hot-air supplying device 18 over the photographic sensitive material PA conveyed from the development section 12, thereby drying a developing solution attached to the photographic sensitive material PA.

The sorting section 14 includes a size sorting part 19 for sorting pieces produced from the exposed, developed and dried photographic sensitive material PA by size, and an order sorting part 20 for sorting by order small pieces of the photographic sensitive material PA previously sorted by size.

The size sorting part 19 discharges large pieces of the photographic sensitive material PA to a tray 21, and transfers small pieces of the photographic sensitive material PA to a conveyor 22. The order sorting part 20 sorts by order the pieces of the photographic sensitive material PA conveyed by the conveyor 22 into respective trays 23.

Now, the description will be made for image processing by the image processing apparatus 1. First, the CPU 8 starts an image processing program installed in the ROM 9a of the main control unit 5, thereby allowing the monitor 6 to display a main screen (not illustrated). The user selects the reading source of image data, or selects the photographic film F or the media M from which image data is read out. Then, the selected image data is stored in the RAM 9b (a memory means).

Then, a button for switching to a judgment screen on the main screen is selected and clicked by using such as a mouse 7b so as to switch the main screen to a judgment screen 30 as illustrated in FIG. 3. The judgment screen 30 is arranged to display in index mode plural frame images 31 read in (6 frame images in this embodiment) of 2 rows × 3 columns. For avoiding redundant explanation, the description on the functions and the manners of operation of the color correction buttons 33y, 33m, 33c, density correction button 33d and the DSA button 34 will be herein omitted.

The image processing by the image processing apparatus according to this embodiment of the present invention has a distinguished feature that plural different correction items are grouped for batch correction. In this embodiment, the grouping is made for each combination of "COLOR DENSITY CORRECTION", "CONTRAST", "CHROMA" and "SHARPNESS". By the COLOR DENSITY CORRECTION is herein meant to include corrections to "Y", "M", "C" and "D".

This grouped information sources (records) each are designed to deal with a given number of records (e.g., 8 records). Specifically, the group information sources are controlled by a table (a group correction table) made corresponding to previously fixed "assigned keys" (in this embodiment, "A", "S", "D", "F", "Q", "W", "E" and "R" of the keyboard 7a). Each record of the group correction table contains an item for inputting the name of each group, which can be optionally set by the user to allow for ease of identification of each record by name.

The group correction table may be previously stored in the ROM 9a (at this moment, groups and names corresponding to the respective assigned keys are in empty or default state), and may be stored in the RAM 9b along with the start of the image processing program. Alternatively, the group correction table may be designed to be as a table resident in a nonvolatile memory from the very beginning. In the latter case, even after the program is terminated or the photo-processing system is turned off, the values set by the user are maintained.

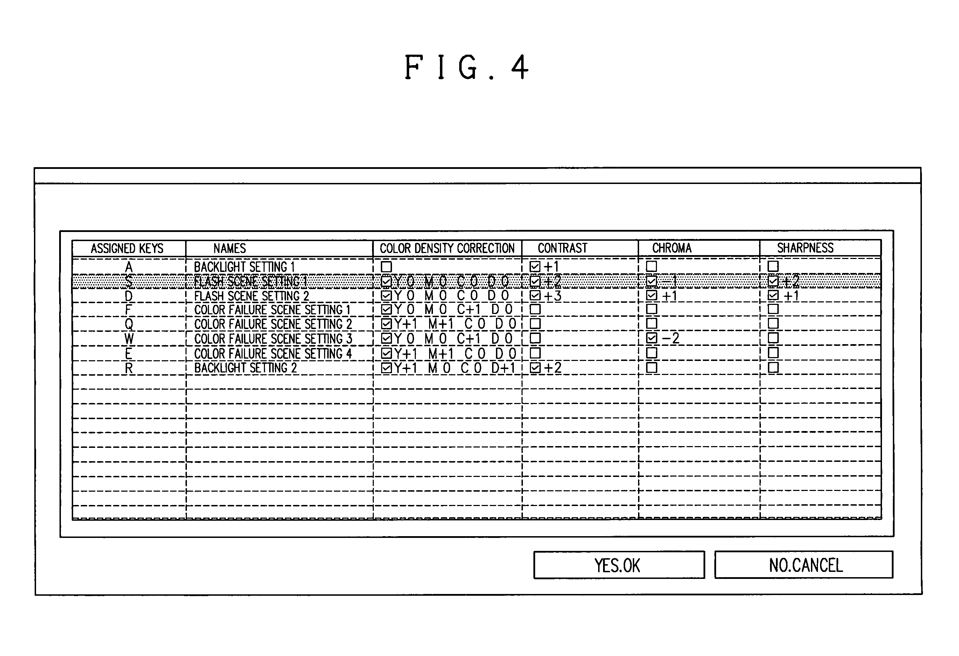

Now, specific description will be made for the procedure of the grouped correction process. FIG. 4 illustrates a group-correction setting screen of this embodiment. The group-correction setting screen displays the set content of the current group correction table. The correction items each are provided with a check box for identification of whether a corresponding item is effective or not. In this embodiment, a checked check box indicates that the corresponding correction item is effective. In the items of "COLOR DENSITY CORRECTION", numerical values (e.g., "0" and "+1") displayed next to "Y", "M", "C" and "D" respectively represent their correction values. Numerical values displayed in the respective items of "CONTRAST", "CHROMA" and "SHARPNESS" also respectively represent their correction values.

The user can change the content (in this embodiment, the content of all the items except the "assigned keys") of the group correction table by using the group-correction setting screen. Specifically, a record whose content is to be corrected or item to be corrected is selected such as by moving a cursor thereto and then checking a check box, inputting the name of a group, inputting a correction value and the like become possible by using the keyboard 7a, the mouse 7b and the like.

After changing is made on the group-correction setting screen, a "YES. OK" button is pressed or clicked so as to reflect the changed name, correction value and the like in the group correction table while closing the group-correction setting screen. On the other hand, a "NO. CANCEL" button is pressed or clicked so as not to reflect the changed name, the correction value and the like in the group correction table, while closing the group-correction setting screen.

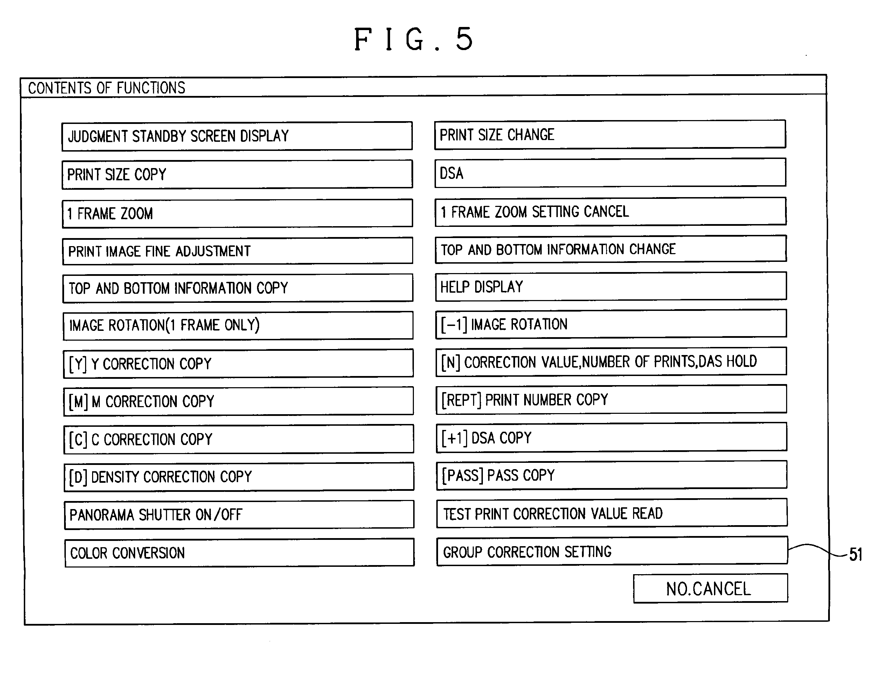

The group-correction setting screen is displayed by pressing or clicking a "GROUP CORRECTION SETTING" button 51 arranged on a FUNCTION screen of FIG. 5. The FUNCTION screen is displayed by pressing or clicking a "F" button 35 on the judgment screen 30 of FIG. 3.

While the content of the group correction table can be changed on the group-correction setting screen, it can also be changed on the judgment screen 30 of FIG. 3. The description will be made for a changing manner on the judgment screen 30. First, a mouse cursor (a pointer P) is moved to a subject frame image 31 (e.g., Rea101.BMP) and then clicked so as to hold the subject frame image 31 in the selected state. Then, an operation associated with a key (e.g., "W") assigned to the group information to be changed (e.g., setting for compensation for color failure 3, hereinafter referred simply to color failure setting 3) is performed so as to reflect in batch manner the changed content, which has been applied to Real01.BMP, in the respective items of correction of the color failure setting 3. By an operation associated with a key is herein meant such as a simple operation which involves pressing Shift key and an assigned key (herein "W") at the same time, or right clicking a mouse so as to display assigned keys in index mode and selecting a corresponding key (herein "W") from the displayed keys.

Thus, the changed content (the content of "Y":0, "M":0, "C":-1, "D":0 and DSA) of a corresponding frame image 31 (Rea101.BMP) can be instantly reflected in the items of correction of the color failure setting 3 in batch manner only through such a simple operation. As illustrated in FIG. 4, in the color failure setting 3, the check boxes of "CONTRAST" and "SHARPNESS" are not checked so that these two items of correction are not changed. In this case, where prior to the changing operation, the group-correction setting screen is opened and the check boxes of "CONTRAST" and "SHARPNESS" are checked so as to make them effective for correction, the changing thereto can also be made in the batch correction. Alternatively, it is possible to have a changing mode allowing all the items of correction to be designated as items to be corrected, irrespective of whether or not the check boxes of them are checked. In this case, the items whose check boxes are not checked are automatically checked when the batch correction is made.

Now, the description will be made for a manner of reflecting the content of the group correction table in a frame image 31. First, a mouse cursor (a pointer P) is moved to a subject frame image 31 (e.g., Rea104.BMP) and then clicked so as to hold the subject frame image 31 in the selected state. Then, an assigned key (e.g., "R" key) corresponding to the group information, for which the changed content is to be reflected (e.g., setting for compensation for backlight, hereinafter referred simply to backlight setting 2), is pressed so as to reflect in batch manner the changed content of the backlight setting 2 in Rea104.BMP. In this case, the check boxes of "CHROMA" and "SHARPNESS" in the backlight setting 2 are not checked so that these items do not become subjects for which corrections are reflected, and therefore the correction values prior to the reflection of correction are maintained for these items.

It is also possible to reflect the content of the group correction table in plural frame images 31. In this case, a mouse cursor is moved to subject frame images 31 and clicked while pressing Ctrl key on the keyboard so as to hold these frame images 31 in the selected state, and then assigned keys corresponding to the group information for which the changed content is to be reflected are pressed so that the changed content relating to the group information is reflected in batch manner in those frame images 31.

As described above, according to the image processing apparatus of this embodiment, there is provided a group correction table that is capable of holding plural different groups, each made up of the respective items of correction, namely "COLOR DENSITY CORRECTION", "CONTRAST", "CHROMA" and "SHARPNESS", respectively set corresponding to the information data relating respectively to assigned keys on the keyboard, so that the content of correction relating to a desired one of the groups set in the group correction table can be reflected in batch manner in a subject frame image, and hence a correction operation for frame images for which the same content of correction is to be applied can be promptly made. Thus, an improved correction operation can be achieved.

The image processing apparatus of the present invention is not necessarily limited to this embodiment and therefore can be modified without departing from the scope of the present invention. For example, while the items of correction to be grouped are "COLOR DENSITY CORRECTION", "CONTRAST", "CHROMA" and "SHARPNESS" in the above embodiment, various items of correction can be combined with each other without the necessity to limit them to those items.

While assigned keys are previously fixed in the above embodiment, it is possible for the user to modify the assigned keys or add keys after the fixation according to needs and circumstances.

## Claims

1. An image processing apparatus for reading out at least one image data stored in a storing means and displaying the same on a screen, and applying a given correction to image data of said at least one image data selected by a user via said screen, comprising:
a group correction table having plural group information sources, each containing a correction group of plural different correction items and identification information for allowing for unique identification of said correction group; wherein
said image processing apparatus is designed so that the content of correction relating to a desired one of the group information sources can be reflected in batch manner in image data selected by a user.

2. An image processing apparatus according to claim 1, wherein a group-correction setting screen can be displayed so as to allow the user to check the content of the group correction table.

3. An image processing apparatus according to any one of claims 1 and 2, wherein the content of correction relating to each of the group information sources of the group correction table can be changed according to needs and circumstances.

4. An image processing apparatus according to any one of claims 2 and 3, wherein said plural different correction items in the content of correction relating to each of said group information sources can be changed independently of each other via the group-correction setting screen.

5. An image processing apparatus according to any one of claims 1-4, wherein the content of correction relating to a desired one of the group information sources of the group correction table can be changed in batch manner to the content of correction relating to image data selected by the user.

6. An image processing apparatus according to claim 1, wherein plural image data can be selected as subjects to which the content of correction relating to the desired one of the group information sources is reflected in batch manner.

7. An image processing apparatus according to any one of claims 1-6, wherein said group correction table is arranged so as to allow the user to selectively make each of said plural different correction items valid or invalid.

8. An image processing apparatus according to claim 1, wherein said plural different correction items in said correction group comprise color density, contrast, chroma and sharpness.

9. An image processing apparatus according to claim 1, wherein the content of correction relating to the desired one of the group information sources of the group correction table can be reflected in batch manner in the selected image data by an operation associated with the identification information for allowing for unique identification of said correction group.

10. An image processing apparatus according to claim 5, wherein the content of correction relating to the desired one of the group information sources of the group correction table can be changed in batch manner to the content of correction relating to the selected image data by an operation associated with the identification information for allowing for unique identification of said correction group.
